# EUROPÄISCHE PATENTSCHRIFT

(11) **EP 1 851 089 B1**
(45) Veröffentlichungstag und Bekanntmachung des Hinweises auf die Patenterteilung: **23.07.2008**
(21) Anmeldenummer: 06708164.6
(22) Anmeldetag: 10.02.2006
(51) Int. Cl.: B60Q 1/12

(54) **VERFAHREN ZUR NULL-LAGENPOSITIONIERUNG EINER HORIZONTAL SCHWENKBAREN SCHEINWERFEREINHEIT EINER FAHRZEUGBELEUCHTUNGSEINRICHTUNG**
METHOD FOR SETTING THE ZERO POSITION OF A HEADLIGHT UNIT, WHICH CAN BE PIVOTED HORIZONTALLY, IN A VEHICLE ILLUMINATION DEVICE
PROCEDE POUR PLACER DANS LA POSITION ZERO UNE UNITE DE PHARE POUVANT PIVOTER HORIZONTALEMENT POUR UN ENSEMBLE D'ECLAIRAGE POUR VEHICULE

(30) Priorität: 25.02.2005 DE 102005008708
(43) Veröffentlichungstag der Anmeldung: 07.11.2007
(73) Patentinhaber: Hella KGaA Hueck & Co., 59552 Lippstadt (DE)
(72) Erfinder: KASPRZOK, Ralf, 33428 Harsewinkel (DE); NEMATI, Shaham, 44227 Dortmund (DE)
(86) Internationale Anmeldenummer: PCT/EP2006/050821
(87) Internationale Veröffentlichungsnummer: WO 2006/089846

(56) Entgegenhaltungen:
- EP-A- 1 234 716
- DE-A1- 10 059 677
- DE-A1- 10 329 873
- US-A1- 2002 163 815

## Beschreibung

Die Erfindung bezieht sich auf ein Verfahren zur Positionierung einer horizontal schwenkbaren Scheinwerfereinheit einer Fahrzeugbeleuchtungseinrichtung in einer Null-Lage (Geradeausfahrt), wobei die Scheinwerfereinheit relativ zu dieser Null-Lage nach links und rechts jeweils um mindestens einen Winkel α verschwenkbar ist.

Aus der DE 102 41 214 A1 ist eine Scheinwerferanordnung mit einer horizontal schwenkbaren Scheinwerfereinheit (sogenannter Kurvenscheinwerfer) bekannt, welche relativ zu einer Null-Lage nach links und nach rechts jeweils um mindestens einen Winkel α verschwenkbar ist. Diese Scheinwerferanordnung umfasst einen Schrittmotor als elektromechanischen Aktuator zum Verschwenken der Scheinwerfereinheit. Darüber hinaus umfasst diese Scheinwerferanordnung einen Hallsensor als Positionssensor zur Bestimmung der jeweils aktuellen Schwenkwinkelposition der Scheinwerfereinheit. Mit Hilfe dieses Hallsensorsignals kann ersten anhand des Vorzeichens des Sensorsignals festgestellt werden, ob die Scheinwerfereinheit bezogen auf die Null-Lage nach links oder rechts verschwenkt ist, und zweitens kann anhand der Amplitude des Hallsensorsignals festgestellt werden, um wieweit (Winkelgrad) die Scheinwerfereinheit bezogen auf die Null-Lage verschwenkt ist. Beim Starten des Fahrzeugs (Einschalten der Zündung), wo im allgemeinen zunächst unbekannt ist, in welcher Schwenkwinkelposition die Scheinwerfereinheit sich befindet, wird dann zunächst mittels des Hallsensors die Ausgangsposition bestimmt. Da dann die Lage der Ausgangsposition und die Größe der Abweichung von der Null-Lage bekannt ist, kann dann einfach und schnell die bekannte Null-Lage angefahren werden.

Allerdings ist die Verwendung einer Hallsensorik, die nicht nur in der Lage ist, festzustellen, ob die Scheinwerfereinheit bezogen auf die Null-Lage nach links oder rechts verschwenkt ist, sondern auch in der Lage ist, festzustellen, wieweit die Schwenkwinkeleinheit denn von der Null-Lage entfernt ist, vergleichsweise aufwendig und teuer.

Wenn man eine Scheinwerferanordnung mit einer schwenkbaren Scheinwerfereinheit lediglich mit einem einfachen Positionssensor (z.B. einem einfachen Hall-Schalter, der nur zwei Zustände annehmen kann) ausstatten würde, der nur in der Lage ist festzustellen, ob die Schweinwerfereinheit bezogen auf die Null-Lage nach links oder rechts verschwenkt ist, so könnte man die Kosten reduzieren, da ein solcher Positionssensor wesentlich kostengünstiger ist. Allerdings hätte man dann das Problem, dass beim Starten des Fahrzeugs unklar ist, wieweit die aktuelle Schwenkwinkelposition (Ausgangsposition) der Scheinwerfereinheit von der Null-Lage abweicht. Dabei stellt sich dann die Frage, wie die Scheinwerfereinheit einfach, schnell und zuverlässig in die Null-Lage gebracht werden kann.

Aus der DE 100 21 040 A1 ist es bekannt, die Zentrierung der schwenkbaren Scheinwerfereinheit in der Null-Lage auf mechanischem Wege mittels einer Rückstellfederkonstruktion zu realisieren. Eine derartige Rückstellfederkonstruktion ist jedoch ebenfalls relativ aufwendig und bedeutet zum anderen eine Einschränkung der Antriebskonzepte hinsichtlich der einsetzbaren Aktuatoren und deren konstruktive Ankopplung an die Schweinwerfereinheit. Aus der EP 1 234 716 A2 ist ein gattungsmäßiges Verfahren zur Null-Lagenpositionierung bekannt.

Aufgabe der Erfindung ist es, ein Verfahren anzugeben, mit dem in einfacher, schneller und zuverlässiger Weise die schwenkbare Scheinwerfereinheit in die Null-Lage gebracht werden kann, wobei aus Kostengründen lediglich ein einfacher Positionssensor verwendet werden soll, der nur in der Lage ist festzustellen, ob die Schweinwerfereinheit bezogen auf die Null-Lage nach links oder rechts verschwenkt ist.

Diese Aufgabe wird durch die Merkmale des Patentanspruches 1 gelöst. Die sich daran anschließenden abhängigen Ansprüche stellen vorteilhafte Weiterbildungen dar.

Erfindungsgemäß wird - nachdem anhand des einfachen Positionssensor-Signals festgestellt wurde, ob die Schweinwerfereinheit in der Ausgangslage bezogen auf die Null-Lage nach links oder rechts verschwenkt ist - die Scheinwerfereinheit mit einer hohen Geschwindigkeit über den Aktuator von der Ausgangslage in Richtung Null-Lage verschwenkt, wobei in bestimmten Zeitabständen oder fortlaufend über die Abtastung des Positionssensor-Signals festgestellt wird, ob die Schwenkposition der Scheinwerfereinheit bezogen auf die Null-Lage sich geändert hat. Wenn dann die Schwenkposition der Scheinwerfereinheit bezogen auf die Null-Lage sich geändert hat, d.h. die Null-Lage "überfahren" wurde, wird ein Abbremsvorgang für den Aktuator eingeleitet, wobei der Aktuator bis zum Stillstand in einer Zwischenposition abgebremst wird. Aufgrund der hohen Geschwindigkeit des Positionierungsvorlaufes weicht die Stillstands-Position (= Zwischenposition) der Scheinwerfereinheit jedoch noch von der Null-Lage ab.
Dies hat zwei Gründe:
a) Selbst dann, wenn der Bremsvorgang unmittelbar eingeleitet wird, nachdem über die Abtastung des Positionssensor-Signals festgestellt wird, dass die Schwenkposition der Scheinwerfereinheit bezogen auf die Null-Lage sich geändert hat, d.h. die Null-Lage erreicht wurde, ist der Bremsweg aufgrund der hohen Geschwindigkeit nicht beliebig kurz.
b) Da die Abtastung des Positionssensor-Signals im allgemeinen nur in bestimmten, nicht beliebig kurzen Zeitabständen erfolgt, ist zwischen dem Zeitpunkt, in dem die Scheinwerfereinheit tatsächlich die Null-Lage erreicht hat, und der Feststellung (Detektion), dass die Schwenkposition der Scheinwerfereinheit bezogen auf die Null-Lage sich geändert, eine gewisse Zeit verstrichen, in der - insbesondere bei einer hohen Geschwindigkeit - die Scheinwerfereinheit in nicht tolerierbarer Weise über die Null-Lage hinaus verschwenkt wurde.

Die hohe Geschwindigkeit des Positionierungsvorlaufes hat jedoch den Vorteil, dass man sich schnell an die Null-Lage "herantastet". Dies ist insbesondere dann wichtig, wenn die Ausgangslage beim Starten des Fahrzeuges stark von der Null-Lage abweicht, wenn also die Scheinwerfereinheit sich in der Ausgangslage in einer extremen Schwenkposition befindet. In jedem Fall ist die Abweichung der Schwenkposition von der Null-Lage nach dem schnellen Positionierungsvorlauf wesentlich geringer als die Abweichung der Ausgangslage.

Um die Scheinwerfereinheit nun möglichst genau in der Null-Lage zu positionieren, wird in einem weiteren Schritt die Scheinwerfereinheit mit einer niedrigen Geschwindigkeit über den Aktuator von der Zwischenposition in Richtung Null-Lage verschwenkt (langsamer Positionierungsrücklauf), wobei wiederum in bestimmten Zeitabständen oder fortlaufend über die Abtastung des Positionssensor-Signals festgestellt wird, ob die Schwenkposition der Scheinwerfereinheit bezogen auf die Null-Lage sich geändert hat. Wenn dann die Schwenkposition der Scheinwerfereinheit bezogen auf die Null-Lage sich geändert hat, wird der Aktuator angehalten.

Aufgrund der im Vergleich zum schnellen Positionierungsvorlauf wesentlich niedrigeren Geschwindigkeit, kann der Aktuator unmittelbar nachdem festgestellt wurde, dass die Schwenkposition der Scheinwerfereinheit bezogen auf die Null-Lage sich geändert hat, d.h. die Null-Lage erreicht wurde, in seine Stillstandsposition gebracht werden. Es gibt hier keinen die Positioniergenauigkeit beeinträchtigenden Bremsweg.
Aufgrund der wesentlich geringeren Geschwindigkeit beim Positionierungsrücklauf ist auch der die Positioniergenauigkeit beeinträchtigende Verschwenkweg, den die Scheinwerfereinheit zwischen zwei Abtastintervallen zurücklegt, wesentlich kleiner.

Die Geschwindigkeit beim langsamen Positionierungsrücklauf sollte im Vergleich zum schnellen Positionierungsvorlauf mindestens um den Faktor 5, vorzugsweise um den Faktor 10 niedriger sein.

Anhand der beigefügten Zeichnungen soll die Erfindung nachfolgend näher erläutert werden. Es zeigt:
- Figur 1: eine schematische Darstellung einer Scheinwerferanordnung mit einer schwenkbaren Scheinwerfereinheit,
- Figur 2: ein Zeitdiagramm für den schellen Positionierungsvorlauf, wobei korrespondierend auch der Zustand des Hall-Schalters dargestellt ist,
- Figur 3: ein Zeitdiagramm für den langsamen Positionierungsrücklauf, wobei korrespondierend ebenfalls auch der Zustand des Hall-Schalters dargestellt ist,

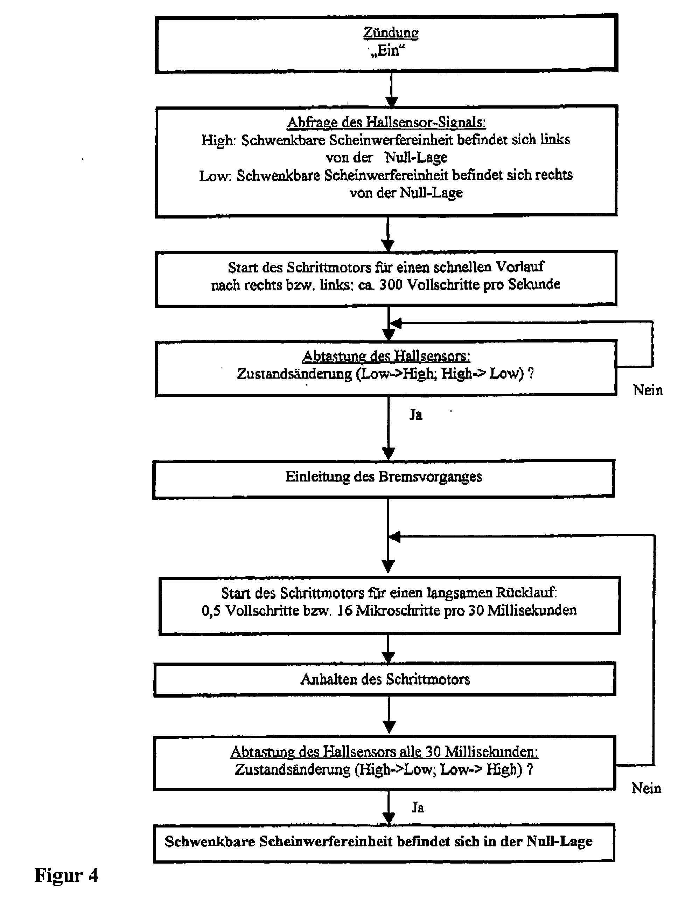

- Figur 4: ein Flussdiagramm des erfindungsgemäßen Verfahrens.

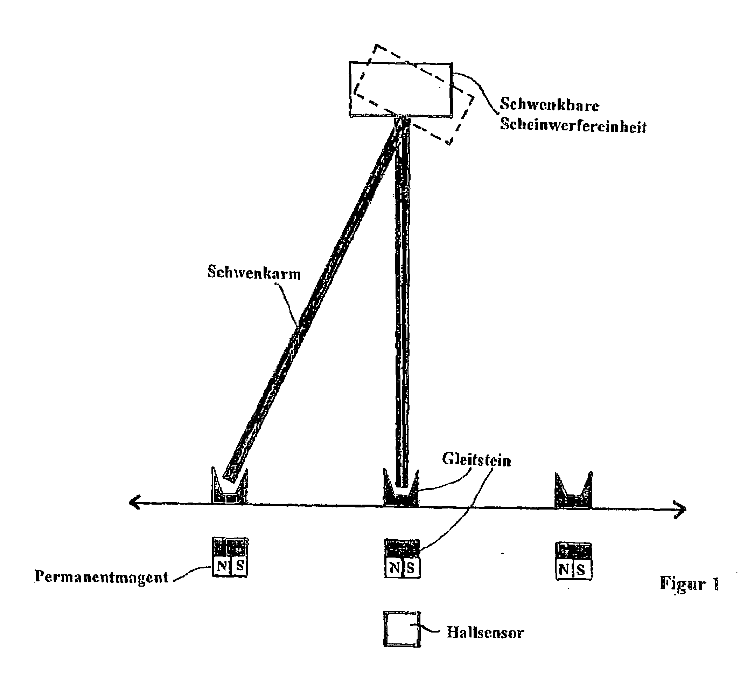

Figur 1 zeigt eine schematische Darstellung einer Scheinwerferanordnung mit einer horizontal schwenkbaren Scheinwerfereinheit, die um eine vertikale Achse A geschwenkt wird. Bei der schwenkbaren Scheinwerfereinheit kann es sich um eine Einheit bestehend aus einem Reflektor und einem Leuchtmittel (Gasentladungslampe oder Halogenlampe) oder um eine Einheit bestehend aus einem Linsensystem und einem Leuchtmittel handeln.

Zum Zwecke des Verschwenkens ist in der beispielhaft dargestellten Ausführungsform die schwenkbare Scheinwerfereinheit mit einem Schwenkarm verbunden, der an seinem einen Ende drehbar mit der Achse A verbunden ist und an seinem anderen Ende in eine Aussparung eines sogenannten Gleitsteins eingreift, wobei die Verschwenkung des Schwenkarms - und mit ihm der Scheinwerfereinheit - über eine lineare Verschiebung des Gleitsteins bewirkt wird. Die Verschiebung des Gleitsteins wird nun wiederum über einen nicht dargestellten Schrittmotor als Aktuator bewirkt. An dem Gleitstein ist ein Permanentmagnet angeordnet, der mit dem Gleitstein verschoben wird. Die Position des Permanentmagneten/Gleitsteins bezogen auf eine Null-Lage - und damit die Schwenkposition der Scheinwerfereinheit bezogen auf die Null-Lage - ist über einen feststehenden Hall-Schalter als Positionssensor detektierbar. Das Ausgangssignal des Hall-Schalters kann lediglich zwei Zustände ("High" oder "Low") annehmen, wobei das Ausgangssignal den Zustand "High" annimmt, wenn die Scheinwerfereinheit sich links von der Null-Lage befindet und "Low", wenn die Schweinwerfereinheit sich rechts von der Null-Lage befindet. Selbstverständlich kann die Zuordnung der Zustände auch umgekehrt sein.

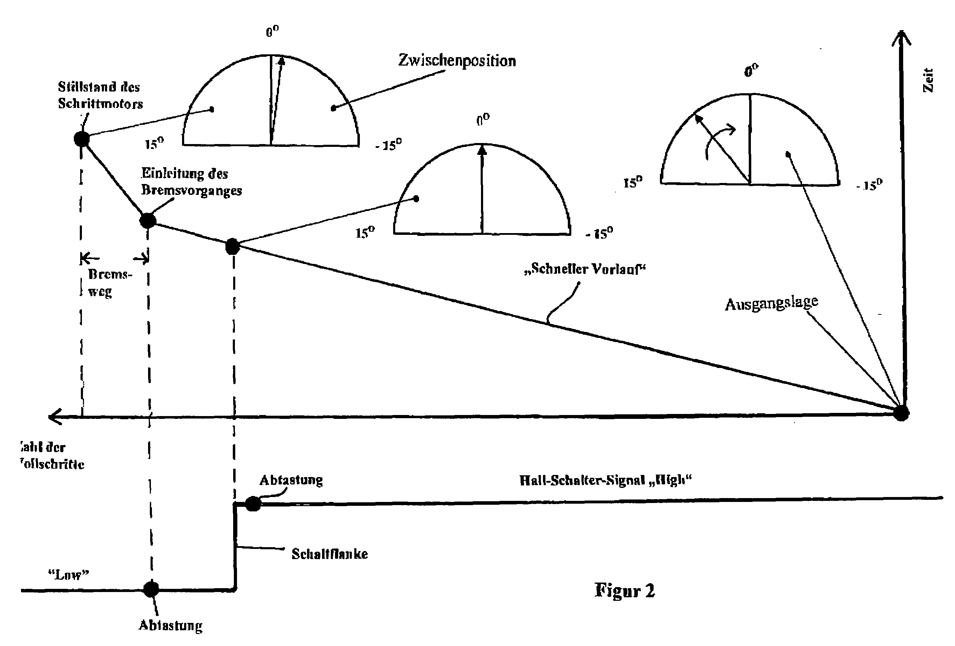

In Figur 2 ist ein Zeitdiagramm für den schellen Positionierungsvorlauf dargestellt, wobei die Zahl der Vollschritte des Schrittmotors gegenüber der Zeit aufgetragen ist. In der Ausgangslage, d.h. beim Einschalten der Zündung sei die Scheinwerfereinheit beispielsweise um ca. 7° nach links von der Null-Lage verschwenkt, was durch die Zeigerdarstellung veranschaulicht werden soll. Dabei beträgt der Schwenkwinkelbereich der Scheinwerfereinheit insgesamt ± 15° symmetrisch zur Null-Lage. Unmittelbar mit oder nach dem Einschalten der Zündung wird der Zustand des Hall-Schalters abgefragt, um festzustellen, ob die Scheinwerfereinheit links oder rechts zur Null-Lage verschwenkt ist. Im vorliegenden Beispiel ist das Ausgangsignal des Hall-Schalters "High", d.h. die Scheinwerfereinheit befindet sich links von der Null-Lage. Nun wird der Schrittmotor für einen schnellen Positionierungsvorlauf gestartet, um die Scheinwerfereinheit in Richtung Null-Lage, d.h. in diesem Fall nach rechts (im Uhrzeigersinn) zu verschwenken. Dem Schwenkwinkelbereich α von betragsmäßig 15° entsprechen ca. 220 Vollschritte des Schrittmotors, wobei der Schrittmotor auch in Mikroschritten (16 Mikroschritte = 1 Vollschritt) angesteuert werden kann. Im schnellen Positionierungsvorlauf beträgt die Geschwindigkeit, mit der der Aktuator betrieben wird, ca. 300 Vollschritte pro Sekunde. Während des schnellen Positionierungsvorlaufes wird in bestimmten Zeitabständen, beispielsweise alle 30 Millisekunden, das Ausgangssignal des Hall-Schalters abgetastet, um festzustellen, ob sich der Zustand geändert hat (Flanke: "High" -> "Low"), was bedeuten würde, dass sich auch die Schwenkposition der Scheinwerfereinheit bezogen auf die Null-Lage geändert hätte. Bei der relativ hohen Geschwindigkeit des Schrittmotors werden innerhalb eines Abtastintervalls von 30 Millisekunden fast 10 Vollschritte zurückgelegt Im ungünstigsten Fall wird die Zustandsänderung des Hall-Schalters, d.h. die Tatsache, dass die Scheinwerfereinheit die Null-Lage überfahren hat, erst 10 Vollschritte später festgestellt. Dann erst kann der Bremsvorgang für den Schrittmotor eingeleitet werden. Ein sofortiges Anhalten des Schrittmotors - ohne jede Verzögerung - ist aufgrund der hohen Geschwindigkeit nicht möglich. Dabei beträgt der Bremsweg je nach verwendetem Schrittmotor zusätzlich ca. 5 Vollschritte. Der Stillstand des Schrittmotors und damit der Scheinwerfereinheit wird also insgesamt erst ca. 15 Vollschritte nach dem Zeitpunkt erreicht, in dem die Null-Lage tatsächlich überfahren wurde. Damit besteht hinsichtlich der Schwenkposition (Zwischenposition) nach dem schnellen Positionierungsvorlauf immer noch eine Ungenauigkeit von ca. 1 °. Allerdings hat man sich auf diese Art sehr schnell an die Null-Lage herangetastet, wenn man bedenkt, dass die Ungenauigkeit in der Ausgangslage 15° beträgt.

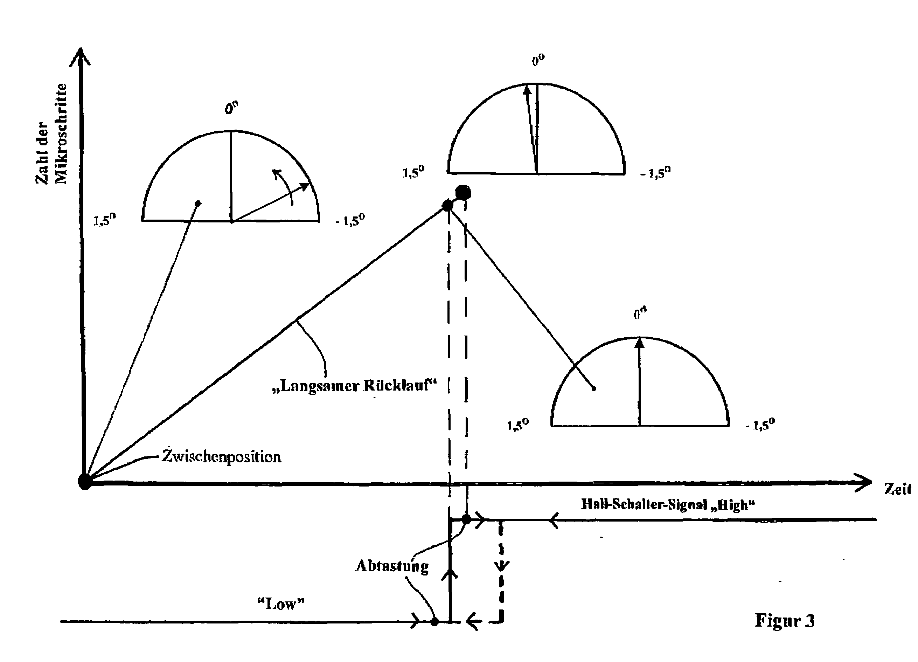

In Figur 3 ist ein Zeitdiagramm für den langsamen Positionierungsrücklauf dargestellt, wobei diesmal die Zahl der Mikroschritte des Schrittmotors gegenüber der Zeit aufgetragen ist. Dabei wird der Schrittmotor so angesteuert, dass in dem Abtastintervall für den Hall-Schalter von 30 Millisekunden ein Vollschritt bzw. 16 Mikroschritte zurückgelegt werden. Dies entspricht einer Geschwindigkeit von ca. 30 Vollschritten/Sekunde, die um den Faktor 10 niedriger ist als beim schnellen Positionierungsvorlauf. Beim langsamen Positionierungsrücklauf wird also ausgehend von der Zwischenposition die Scheinwerfereinheit in Richtung Null-Lage (im dargestellten Beispiel nach links, d.h. gegen den Uhrzeigersinn) verschwenkt, indem alle 30 Millisekunden jeweils 1 Vollschritt zurückgelegt wird, und dann der Hall-Schalter abgetastet wird, um festzustellen, ob sein Zustand sich geändert hat. Falls der Zustand des Hall-Schalters sich nicht geändert hat, wird wiederum ein Vollschritt zurückgelegt usw. bis schließlich der Zustand des Hall-Schalters sich geändert hat (Flanke: "Low" -> "High"), was bedeutet, dass sich auch die Schwenkposition der Scheinwerfereinheit bezogen auf die Null-Lage geändert hat. Wenn dann eine solche Zustandsänderung festgestellt wurde, wird der Schrittmotor angehalten, d.h. kein weiterer Vollschritt mehr zurückgelegt. Da der Schrittmotor innerhalb des Abtastintervalls nur einen Vollschritt zurückgelegt hat, ist die damit verbundene Positionierungsungenauigkeit sehr gering. Auf Grund der geringen Geschwindigkeit kann der Schrittmotor nach dem Abtastintervall auch unmittelbar - ohne Bremsweg - angehalten werden. Somit beträgt die Positionierungsungenauigkeit nach dem langsamen Positionierungsrücklauf nur ca. 1 Vollschritt, d.h. ca. 0,05°. Diese Ungenauigkeit liegt somit lediglich im Bereich der Hysterese des Hall-Schalters. Damit befindet sich die schwenkbare Scheinwerfereinheit mit hinreichender Genauigkeit in der Null-Lage.

## Patentansprüche

1. Verfahren zur Null-Lagenpositionierung einer horizontal schwenkbaren Scheinwerfereinheit einer Fahrzeugbeleuchtungseinrichtung, welche relativ zu einer Null-Lage nach links und rechts jeweils um mindestens einen Winkel α verschwenkbar ist,
- mit einem elektromechanischen Aktuator zum Verschwenken der Scheinwerfereinheit,
- mit einem Positionssensor, der nur in der Lage ist festzustellen, ob die Schweinwerfereinheit bezogen auf die Null-Lage nach links oder rechts verschwenkt ist,
- mit Mitteln zur Bestimmung des Verschwenkweges, den die Scheinwerfereinheit bei Betätigung des Aktuators zurücklegt,
wobei
- in einem ersten Schritt anhand des Positionssensor-Signals festgestellt wird, ob die Schweinwerfereinheit in der Ausgangslage bezogen auf die Null-Lage nach links oder rechts verschwenkt ist,
**dadurch gekennzeichnet, dass**
- in einem zweiten Schritt die Scheinwerfereinheit mit einer hohen Geschwindigkeit über den Aktuator von der Ausgangslage in Richtung Null-Lage verschwenkt wird, wobei in bestimmten Zeitabständen oder fortlaufend über die Abtastung des Positionssensor-Signals festgestellt wird, ob die Schwenkposition der Scheinwerfereinheit bezogen auf die Null-Lage sich geändert hat, wobei dann, wenn die Schwenkposition der Scheinwerfereinheit bezogen auf die Null-Lage sich geändert hat, der Aktuator bis zum Stillstand in einer Zwischenposition abgebremst wird,
- in einem dritten Schritt die Scheinwerfereinheit mit einer niedrigen Geschwindigkeit über den Aktuator von der Zwischenposition in Richtung Null-Lage verschwenkt wird, wobei in bestimmten Zeitabständen oder fortlaufend über die Abtastung des Positionssensor-Signals festgestellt wird, ob die Schwenkposition der Scheinwerfereinheit bezogen auf die Null-Lage sich geändert hat, wobei dann, wenn die Schwenkposition der Scheinwerfereinheit bezogen auf die Null-Lage sich geändert hat, der Aktuator angehalten wird.

2. Verfahren nach Anspruch 1,
**dadurch gekennzeichnet, dass**
als Positionssensor ein Hall-Schalter verwendet wird, der mit einem magnetischen Positionsgeber zusammenwirkt, wobei der magnetische Positionsgeber bei Betätigung des Aktuators (Verschwenken der Scheinwerfereinheit) seine Position ändert.

3. Verfahren nach Anspruch 1 oder 2,
**dadurch gekennzeichnet, dass** als Aktuator ein Schrittmotor verwendet wird, wobei die Mittel zur Bestimmung des Verschwenkweges von einen Schrittzähler gebildet werden.

## Claims

1. Method of moving a headlamp unit to its neutral position, where the headlamp unit can swivel along a horizontal axis, where the headlamp unit is part of a lighting apparatus for vehicles, where the headlamp unit can swivel by at least an angle α towards the left and right of a neutral position, and where the headlamp unit has
- an electromechanical actuator for swiveling the headlamp unit,
- a position sensor whose sole capability is to verify whether the headlamp unit has moved towards the left or right away from its neutral position,
- means of determining the distance traveled by the headlamp unit when operating the actuator,
wherein
- a first step comprises of reading the signal of the position sensor to verify whether the starting point of the headlamp unit is located towards the left or right away from its neutral position,
**characterized in that**
- a second step comprises of making the actuator rapidly move the headlamp unit from its starting point towards the neutral position while reading, either at set intervals or continuously, the position sensor signal to verify whether the actual position of the headlamp unit has changed with reference to the neutral position and to slow down the actuator to standstill at an interim point if the actual position of the headlamp unit is found to have changed with reference to the neutral position,
- a third step comprises of making the actuator slowly move the headlamp unit from the interim point towards the neutral position while reading, either at set intervals or continuously, the position sensor signal to verify whether the actual position of the headlamp unit has changed with reference to the neutral position and to stop the actuator if the actual position of the headlamp unit is found to have changed with reference to the neutral position.

2. Method of claim 1,
**characterized in that**
a Hall witch is used as the position sensor, where the Hall switch acts in conjunction with a magnetic position transducer which will change its position when the actuator is operated (i.e., when the headlamp unit is moved).

3. Method of claim 1 or 2,
**characterized in that**
a stepper motor is used as the actuator and a step counter provides the means of determining the distance moved by the headlamp unit.

## Revendications

1. Procédé de positionnement de position zéro d'un bloc optique d'un dispositif d'éclairage d'un véhicule pivotant horizontalement, bloc optique qui peut pivoter respectivement d'au moins un angle α vers la gauche et vers la droite, par rapport à une position zéro,
- comprenant un actionneur électromécanique pour faire pivoter le bloc optique,
- comprenant un capteur de position qui est seulement en mesure de constater si le bloc optique a pivoté vers la gauche ou vers la droite, par rapport à la position zéro,
- comprenant des moyens servant à déterminer la course de pivotement que le bloc optique parcourt en cas d'actionnement de l'actionneur,
où
- il est constaté, au cours d'une première étape, à l'aide du signal du capteur de position, si le bloc optique, dans la position initiale, a pivoté vers la gauche ou vers la droite par rapport à la position zéro,
**caractérisé en ce que**
- au cours d'une deuxième étape, on fait pivoter le bloc optique en direction de la position zéro, à partir de la position initiale, à une vitesse élevée, par l'actionneur, où à des intervalles de temps déterminés,
ou de façon continue, on constate, par le balayage du signal du capteur de position, si la position de pivotement du bloc optique s'est modifiée par rapport à la position zéro, où, si la position de pivotement du bloc optique s'est modifiée par rapport à la position zéro, l'actionneur est alors freiné, dans une position intermédiaire, jusqu'à l'arrêt,
- au cours d'une troisième phase, on fait pivoter le bloc optique en direction de la position zéro, à partir de la position intermédiaire, à une vitesse faible, par l'actionneur, où, à des intervalles de temps déterminés, ou de façon continue, on constate, par le balayage du signal du capteur de position, si la position de pivotement du bloc optique s'est modifiée par rapport à la position zéro, où, si la position de pivotement du bloc optique s'est modifiée par rapport à la position zéro, l'actionneur est alors arrêté.

2. Procédé selon la revendication 1, **caractérisé en ce que** l'on utilise, comme capteur de position, un commutateur à effet Hall qui agit de façon conjointe avec un transmetteur de position magnétique, où le transmetteur de position magnétique, au cours de l'actionnement de l'actionneur (pivotement du bloc optique), modifie sa position.

3. Procédé selon la revendication 1 ou 2, **caractérisé en ce que** l'on utilise, comme actionneur, un moteur pas à pas, les moyens servant à déterminer la course de pivotement étant formés par un compteur pas à pas.
